# EUROPEAN PATENT SPECIFICATION

(11) **EP 3 091 401 B1**
(45) Date of publication and mention of the grant of the patent: **16.10.2019**
(21) Application number: 15003119.3
(22) Date of filing: 30.10.2015
(51) Int. Cl.: G04C 3/00, G06F 3/0482, G06F 3/0362

(54) **WATCH TYPE TERMINAL**
UHRENARTIGES ENDGERÄT
TERMINAL DE TYPE MONTRE

(30) Priority: 06.05.2015 KR 20150063248
(43) Date of publication of application: 09.11.2016
(73) Proprietor: LG Electronics Inc., Seoul 07336 (KR)
(72) Inventor: EIM, Sanghyung, 06772 Seoul (KR); CHO, Taehoon, 06772 Seoul (KR)
(74) Representative: Beyer, Andreas

(56) References cited:
- EP-A2- 1 832 969
- WO-A1-2014/200766
- WO-A1-2015/034965
- US-A- 5 305 291
- US-A1- 2014 328 147

## Description

### BACKGROUND OF THE INVENTION

### 1. Field of the Disclosure

The present invention relates to the field of watch type terminals.

### 2. Background of the invention

Terminals may be divided into mobile/portable terminals and stationary terminals according to their mobility. Also, the mobile terminals may be classified into handheld terminals and vehicle mount terminals according to whether or not a user can directly carry it.

As it becomes multifunctional, a mobile terminal can be allowed to capture still images or moving images, play music or video files, play games, receive broadcast and the like, so as to be implemented as an integrated multimedia player. Moreover, the improvement in the aspect of structure and software of a mobile terminal may be taken into consideration to support and enhance the functions of the mobile terminal. In recent years, wearable-type glass type terminals formed to be mounted on part of a human body have been developed. A watch type terminal worn on a user's wrist may be controlled by a touch input applied to a display unit 151, a user's voice applied to a microphone or the like. However, a watch type mobile terminal that should be worn on a human body may include a relatively small size of the display unit 151, and thus has a disadvantage that it is inconvenient to form a correct control command through a user's touch input.

WO 2014/200766 A1 discloses a wearable electronic device. The wearable electronic device includes an enclosure having a sidewall with a button aperture defined therethrough, a display connected to the enclosure, a processing element in communication with the display. The device also includes a sensing element in communication with the processing element and an input button at least partially received within the button aperture and in communication with the sensing element, the input button configured to receive two types of user inputs. During operation, the sensing element tracks movement of the input button to determine the two types of user inputs.

US 2014/328147 A1 relates to a wristwatch structure, an electronic crown for wristwatch, and a wristwatch having a display. The wristwatch structure comprises an electric driving component; an electronic core having a plurality of two-dimensional joints; and an electronic crown comprising a rotating portion and a fixed detecting portion, the detecting portion detecting electronic signals according to a rotation of the rotating portion; wherein the detecting portion of the electronic crown exports the electronic signals to the electronic core via one of the joints, and the electric driving component is electrically connected to one set of joints among the two-dimensional joints.

WO 2015/034965 A1 discloses a user interface for navigation on a personal electronics device based on movements of a crown. The device can select an appropriate level of information arranged along a z-axis for display based on crown movement. The navigation can be based on an angular velocity of the crown.

EP 1 832 969 A2 discloses an apparatus and a method for selecting a menu in a portable terminal. The portable terminal includes a first input means that can be rotated stepwise by a predetermined angle, a second input means that can be continuously rotated and pressed, and a controller for providing a menu list corresponding to the rotation direction of the first input means and the number of steps of rotation of the first input means, changing the position of a cursor on the menu list according to the rotation direction and the rotation degree of the second input means, and performing an operation corresponding to a menu in which the cursor is located when the second input means is pressed.

### SUMMARY OF THE INVENTION

Accordingly, the present invention provides a watch type terminal according to claim 1. Preferred embodiments of the invention are set in the dependent claims.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram for explaining the constituent elements of a watch type mobile terminal according to an example of the present disclosure;
FIG. 1B is a view illustrating a watch type terminal according to an embodiment when viewed from one direction;
FIGS. 2A through 2C are conceptual views for explaining the structure of a crown portion;
FIG. 3A is a flow chart for explaining a control method of a watch type terminal according to an example of the present disclosure;
FIGS. 3B through 3D are conceptual views for explaining a control method of FIG. 3A;
FIGS. 4A and 4B are conceptual views for explaining a control method of switching a display mode according to another example;
FIG. 5 is a conceptual view for explaining a method of controlling an application with information selected using a crown portion;
FIGS. 6A through 6C are conceptual views for explaining a control method distinguished from each other according to the state of a crown portion;
FIGS. 7A and 7B are conceptual views for explaining a control method of a watch type terminal according to the push operation of a crown portion;
FIGS. 8A and 8B are conceptual views for explaining a control method of a watch type terminal based on a change of the state of a crown portion;
FIG. 9 is a conceptual view for explaining a control method of a watch type terminal according to the rotation speed of a crown portion;
FIG. 10 is a conceptual view for explaining a control method of changing a display mode arbitrary page a change of the state of a crown portion according to another example;
FIGS. 11A and 11B are conceptual views for explaining a control method of an application using a crown portion;
FIGS. 12A through 12D are conceptual views for explaining a control method of an application using a crown portion according to another example;
FIGS. 13A through 13C are conceptual view for explaining a control method of an application according to still another example; and
FIGS. 14A and 14B are conceptual views for explaining a control method of an application using a crown portion according to still another example.

### DETAILED DESCRIPTION OF THE PREFERRED EMBODIMENTS

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

However, it may be easily understood by those skilled in the art that the configuration according to the examples of this specification can also be applied to stationary terminals such as digital TV, desktop computers and the like, excluding a case of being applicable only to the mobile terminals.

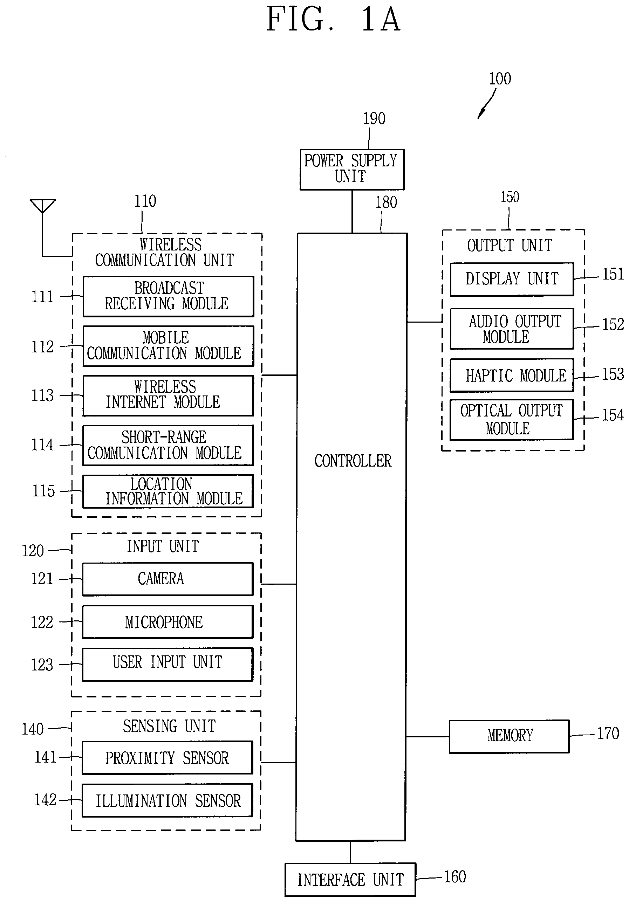

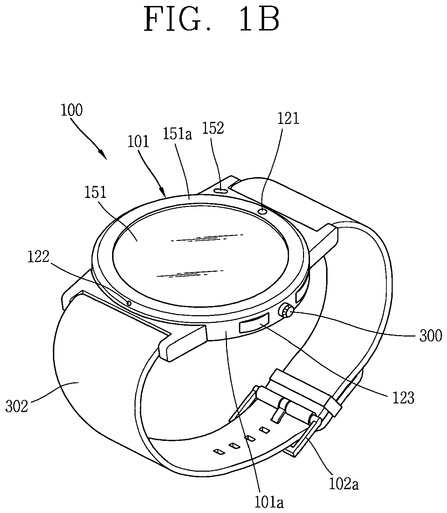

Referring to FIGS. 1A through 1C, FIG. 1A is a block diagram of a mobile terminal in accordance with the present disclosure, FIGS. 1B and 1C are conceptual views of one example of the mobile terminal, viewed from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located.

For example, the wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 may have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

The controller 180 may control at least part of the components illustrated in FIG. 1, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), Long Term Evolution-Advanced (LTE-A) etc.)

Here, the wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies.

Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (Wimax), High Speed Downlink Packet Access (HSDPA), Long Term Evolution (LTE), Long Term Evolution-Advanced (LTE-A) and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LTE, LTE-A and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which is able to exchange data with the mobile terminal 100 (or to cooperate with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user may check the received message using the wearable device.

The location information module 115 denotes a module for detecting or calculating a position of the mobile terminal. An example of the location information module 115 may include a Global Position System (GPS) module or a Wi-Fi module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module. According to the need, the location information module 115 may perform any function of the other modules of the wireless communication unit 110 to obtain data on the location of the mobile terminal. As a module used to acquire the location (or current location) of the mobile terminal, the location information module 115 may not be necessarily limited to a module for directly calculating or acquiring the location of the mobile terminal.

Hereinafter, the input unit 120 will be described in more detail. The input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. On the other hand, the virtual key or the visual key may be displayable on the touch screen in various shapes, for example, graphic, text, icon, video or a combination thereof. The sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor and a laser sensor.

The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may also be implemented as a stereoscopic display unit for displaying stereoscopic images.

The stereoscopic display unit 152 may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a lock state for restricting a user from inputting a control command with respect to applications when a status of the mobile terminal meets a preset condition.

The controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

FIG. 1B is a view illustrating a watch type terminal according to an embodiment when viewed from one direction.

As illustrated in FIG. 1B, the watch type terminal 100 includes a main body 101 with a display unit 151, and a band 102 connected to the main body 101 to be wearable on a wrist.

The main body 101 may include a case defining an appearance. As illustrated, the case may include a first case 101a and a second case 101b cooperatively defining an inner space for accommodating various electronic components. However, the present disclosure may not be limited to this. One case may be configured to define the inner space, thereby implementing a terminal 100 with a uni-body.

The watch type terminal 100 may be allowed to perform wireless communication, and an antenna for the wireless communication may be installed in the main body 101. The antenna may extend its function using a case. For example, a case including a conductive material may be electrically connected to the antenna so as to extend a ground area or a radiation area.

The display unit 151 may be disposed on a front surface of the main body 101 to output information thereon. The display unit 151 may be provided with a touch sensor so as to implement a touch screen. As illustrated, a window 151a of the display unit 151 may be mounted onto the first case 101a to form a front surface of the terminal body together with the first case 101a.

An audio output module 152, a camera 121, a microphone 122, a user input unit 123 and the like may be disposed on the main body 101. When the display unit 151 is implemented as the touch screen, it may function as the user input unit 123, which may result in excluding a separate key on the main body 101.

The band 102 may be worn on the wrist in a surrounding manner. The band 102 may be made of a flexible material for facilitating the wearing. As one example, the band 102 may be made of fur, rubber, silicon, synthetic resin or the like. The band 102 may also be configured to be detachable from the main body 101. Accordingly, the band 102 may be replaceable with various types of bands according to a user's preference.

On the other hand, the band 102 may be used for extending the performance of the antenna. For example, the band may include therein a ground extending portion (not shown) electrically connected to the antenna to extend a ground area.

The band 102 may be provided with a fastener 102a. The fastener 102a may be implemented into a buckle type, a snap-fit hook structure, a Velcro type, or the like, and include a flexible section or material. The drawing illustrates an example that the fastener 102a, is implemented into the buckle type.

A watch type terminal according to the present invention further includes a crown portion 100 moving by a user's external force to form a control command. The crown portion 100 is disposed in one region of the body 101. For example, the crown portion 100 may be disposed on a lateral surface of the body 101, and disposed adjacent to the user input unit 123. The crown portion 100 may be withdrawn from the body 101 or inserted into the body 101 while being connected to the body 101, and rotated in both directions. Hereinafter, the detailed structure of the crown portion 100 will be described.

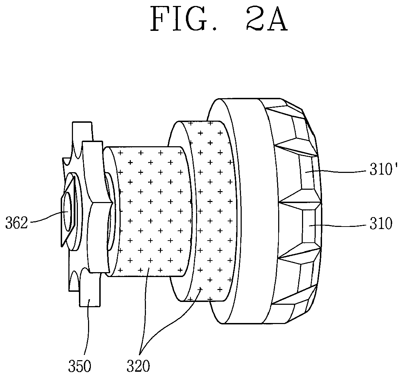

FIGS. 2A through 2C are conceptual views for explaining the structure of a crown portion.

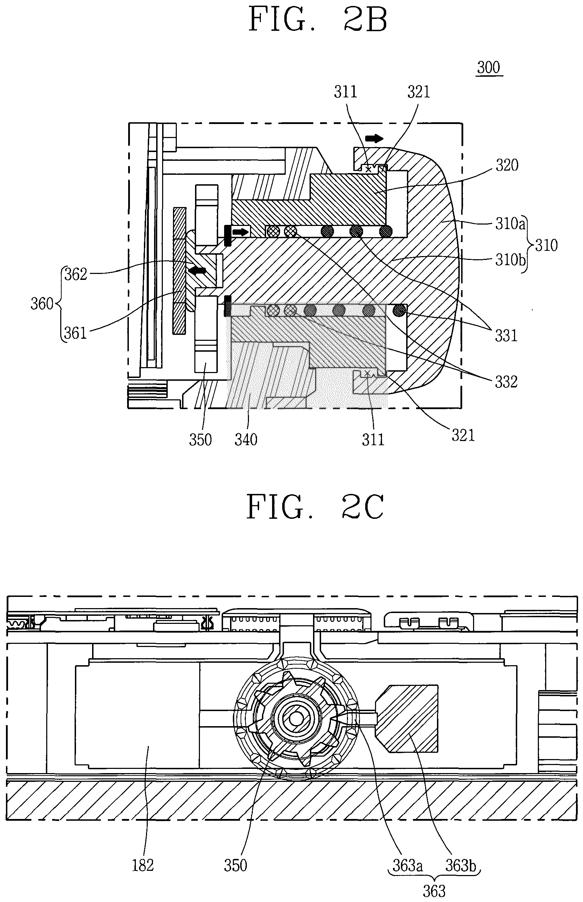

Referring to FIGS. 2A and 2B, the crown portion may include a cap portion 310, a housing 320, an elastic portion 331, an o-ring 332, a dome switch 361, and a pressing portion 362. The body 101 may include an internal space for accommodating the crown portion 300.

At least one region of the cap portion 310 is exposed at an outside. An end surface of the cap portion 310 is formed in a circular shape. A recessed pattern 310' is formed on an external surface of the cap portion 310. A user may more easily perform the rotation and withdrawal of the cap portion 310 by the recessed pattern 310'. The structure of the cap portion 310 may not be necessarily limited to the illustrated drawing. The cap portion 310 may include a first region 310a exposed at an outside to perform the role of a knob and a second region 310b extended from the first region 310a to be accommodated therein. The recessed pattern 310' is formed on the first region 310a.

The cap portion 310 is fixed to an end portion of the housing 320. The housing 320 may include an internal hole formed through which the second region 310b passes. An inner circumferential surface of the first region 310a is formed to surround an outer circumference of the housing 320. In other words, the first region 310a overlaps with part of the second region 310b, and the housing 320 is inserted between the first and the second region 310a, 310b.

The housing 320 includes a protrusion 321 protruded toward an inner circumferential surface of the first region 310a, and the inner circumferential surface of the first region 310a includes a recessed portion 311 into which the protrusion 321 is inserted. The recessed portion 311 may be partitioned into two regions by a protrusion structure. A stopper protruded to engage with a protrusion 321 of the housing 310 is formed on the first region 310a. Accordingly, the housing 320 and the cap portion 310 are not separated from each other.

The o-ring 332 for blocking a fluid introduced from an outside and the elastic portion 331 for elastically supporting the cap portion 310 and the housing 320 are formed between the housing 320 and the second region 310b. The cap portion 310 receives an elastic force to be protruded from the body 101 by the elastic portion 331.

Part of the housing 320 may be exposed by the withdrawal of the cap portion 310. A supporting member 340 for supporting an outer circumferential surface of the housing 320 may be disposed in accommodation space of the body 101.

A tooth portion 350 is mounted on the other end portion of the second region 310b of the cap portion 310. The tooth portion 350 is formed to rotate around an extended direction of the second region 310b. The tooth portion 350 is disposed to be separated from the housing 320, and moves in interlocking with the withdrawal and insertion operation of the cap portion 310. Furthermore, the tooth portion 350 rotates according to the rotation of the cap portion 310.

FIG. 2C is a conceptual view for explaining a first sensing unit 363 configured to sense the rotation of the tooth portion 350. The circuit board 182 is disposed on a region adjacent to the housing 320, and the first sensing unit 363 is formed on the circuit board 182. The first sensing unit 363 may include a rotation rib 363a configured to sense the movement of the tooth portion 350 and a sensing switch 363b configured to generate an electrical signal according to the movement of the rotation rib 363a.

The rotation rib 363a is engaged with one region of the tooth portion 350, and relatively moves based on the rotation of the tooth portion 350. The rotation rib 363a rotates in a different direction according to the rotational direction of the tooth portion 350, and therefore, the rotation rib 363a may form a control command distinguished according to the different direction.

A second sensing unit 360 configured to sense the withdrawal and pressing of the crown portion 300 is formed on the circuit board 182. The second sensing unit 360 is formed with a pressing portion 362 disposed at the center of the tooth portion 350 and a dome switch 361 disposed on the circuit board 182 to form a control signal by the pressing portion 362.

The dome switch 361 is pressed by the pressing portion 362 in a state that the crown portion 300 is completely accommodated into the housing 320, and the withdrawal of the crown portion 300 is sensed by the dome switch 361. For example, the dome switch 361 may be configured with a 2-step dome key for distinguishing a push applied step-by-step. Accordingly, the dome switch 361 may be distinguished into a first state in which the crown portion 300 is completely inserted, a second state in which the crown portion 300 is withdrawn by a first step, and a third state in which the crown portion 300 is further withdrawn by a second step, and additionally distinguished into a fourth state in which the crown portion 300 is deeply inserted based on a user's external force. While being switched to the first through the fourth state, the rotation rib 363a may maintain a state of being coupled to the tooth portion 350 to sense the rotation of the crown portion 300 in any state.

According to the present embodiment, a different control signal is formed according to the movement of a crown portion inserted into the body 101. Hereinafter, a control method of a watch type terminal by the crown portion will be described.

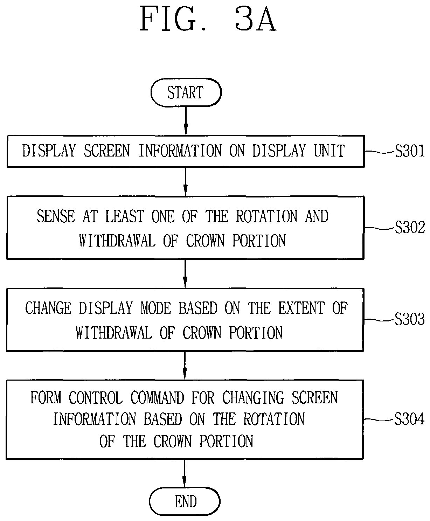

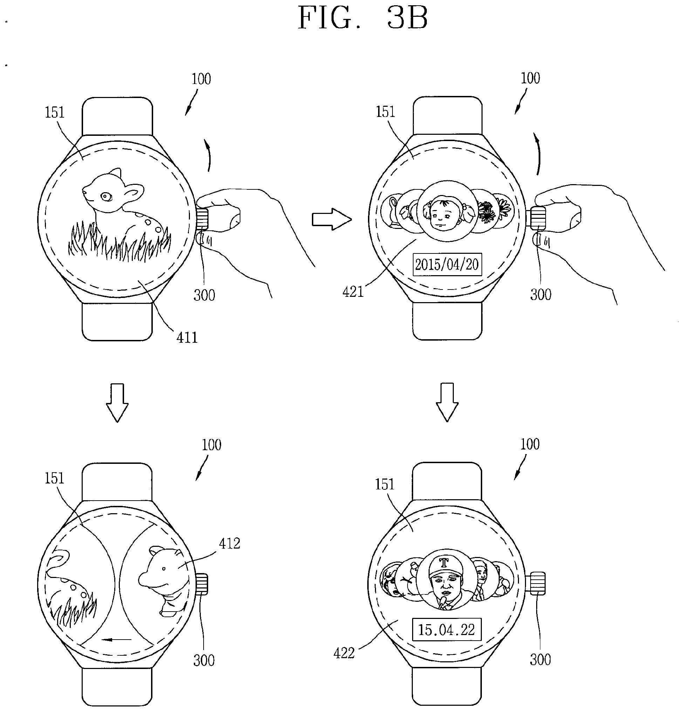

FIG. 3A is a flow chart for explaining a control method of a watch type terminal according to an example of the present disclosure, and FIGS. 3B through 3D are conceptual views for explaining a control method of FIG. 3A.

Referring to FIGS. 2A and 3A, screen information is displayed on the display unit 151 (S301). Here, there is no limit in the screen information. For example, the screen information may correspond to a time information screen indicating a time, a home screen page containing a plurality of icons, an execution screen of a specific application, a lock screen or the like.

At least one of the rotation and withdrawal of a crown portion is sensed based on the first 363 and the second sensing unit 360 (S302). A display mode is changed based on the extent of withdrawal of the crown portion 300 (S303), and a control command for changing the screen information is formed based on the rotation of the crown portion 300 (S304).

Referring to FIG. 3B, screen information 411 is displayed on the display unit 151. For example, the screen information 411 may correspond to any one of sequentially displayed images. In other words, the screen information 411 may correspond to part of an execution screen of a gallery application storing a plurality of images ad displaying them.

When the rotation of the crown portion 300 is sensed in a first state of the crown portion 300 (i.e., in a state that the crown portion 300 is not withdrawn), the display unit 151 switches the screen information 411 to second screen information 412 in a first display mode corresponding to the first state. Here, the first display mode may correspond to a clean view mode for displaying screen information as a whole on the display unit 151 and excluding the display of the remaining time information. In other words, the controller 180 controls the display unit 151 to display one image as a whole on the display unit 151.

As illustrated in the drawing, the display unit 151 may display a screen indicating the process of switching the first screen information 411 to the second screen information 412 based on the extent of rotation of the crown portion 300 (when the rotation is slowly carried out). A screen in which the first screen information 411 gradually disappears and the second screen information 412 gradually appears may be displayed in response to the extent of rotation of the crown portion 300.

On the other hand, when the crown portion 300 is withdrawn in the first state, the display mode is changed. When the crown portion 300 is withdrawn by a first step and switched to a second state, the first display mode is changed to a second display mode. The controller 180 classifies images stored therein for each date, and the display unit 151 displays a first group image 421 containing first group images corresponding to a specific date. Here, the specific date may correspond to a date on which images displayed when the crown portion 300 is withdrawn are stored or specified by a user. The size of a plurality of images contained in the first group image 421 may be determined by a number of images contained in the first group image 421.

When the rotation of the crown portion 300 is sensed in the first state, the controller 180 changes the first group image 421 according to the rotation. For example, the controller 180 controls the display unit 151 to display a second group image 422 on a different date determined based on the extent of rotation of the crown portion 300. Group images containing images stored on a date far from the specific date of the first group image 421 are displayed based on the extent of rotation.

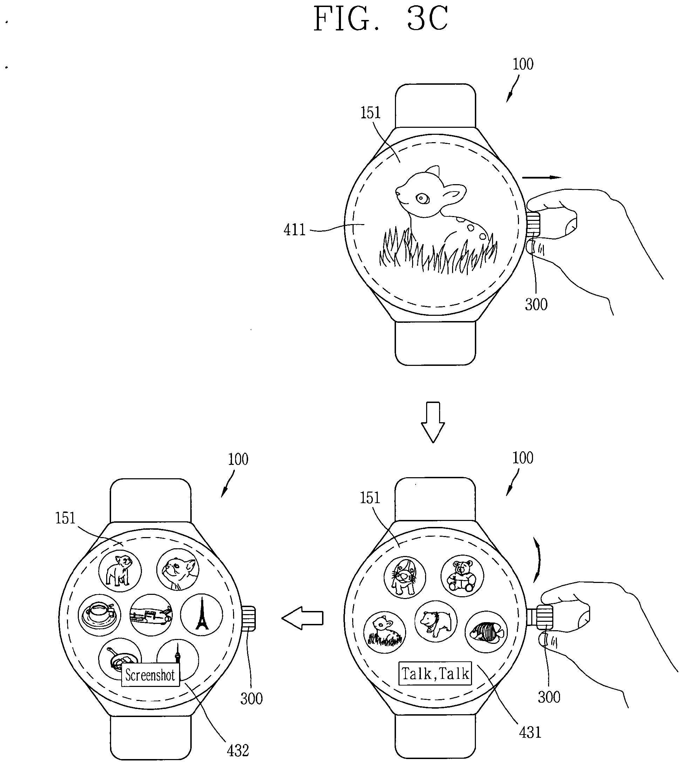

Referring to FIG. 3C, the crown portion 300 is withdrawn by two steps in a first state in which the first screen information 411 is displayed and switched to a third state, the first display mode is switched to a third display mode. For example, the controller 180 classifies stored images based on a specific criteria in the third display mode, and the display unit 151 displays a group image. The specific criteria may correspond to a type of application, tagged information, location information at a time stored, information of a function carried out when an image is stored, information of a person contained in an image, a group set by a user, and the like.

When the first state is switched to the third state based on the movement of the crown portion 300, the controller 180 display a third group image 431 corresponding to a specific group. When the rotation of the crown portion 300 is sensed in the third state, the controller 180 controls the display unit 151 to switch it to a fourth group image 432 containing other images.

According to the present example, the controller 180 may display different information on the display unit 151 without other control commands by the rotation of the crown portion 300, and receive screen information based on a different display mode by the operation of withdrawing and inserting the crown portion.

Accordingly, the user may receive his or her desired screen information in a desired mode without a touch on the display unit 151, particularly performing several steps for changing a display mode. As a result, it may be possible to more easily control a watch type mobile terminal having a relatively small sized structure.

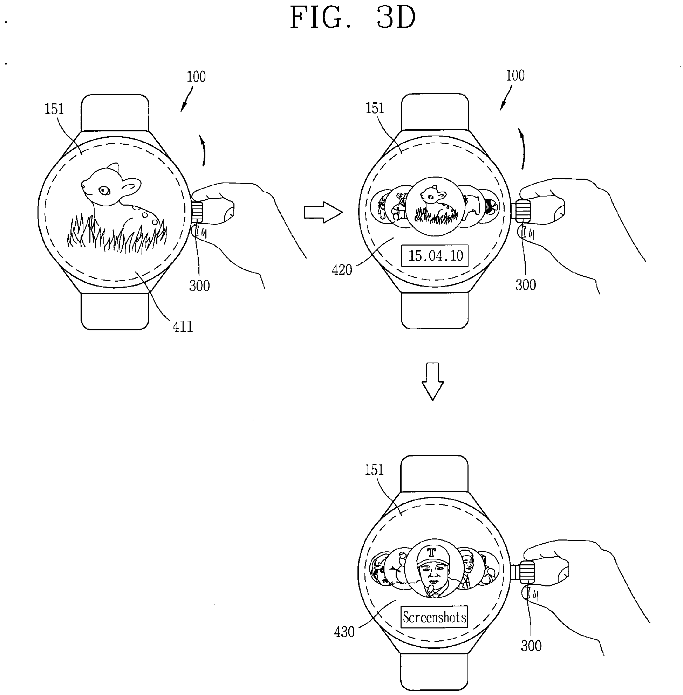

Referring to FIG. 3D, when the crown portion 300 is withdrawn by one step in a state that the first screen information 411 in a first mode is displayed, the controller 180 displays a second mode screen 420 containing the first screen information 411. The second mode screen 420 corresponds to a specific group configured with at least one image stored on a date on which the first screen information 411 is stored. The display unit 151 processes the first screen information 411 contained in the second mode screen 420 to be highlighted.

In other words, the controller 180 may group the remaining images using information contained in the first screen information 411 (for example, a date stored, a location, an application carried out while being stored, a folder in which first screen information is previously stored, figure information contained, tagging information, additional information stored together, etc.)

Furthermore, when the crown portion 300 is withdrawn by two steps, the second mode is changed to a third mode, and a third mode screen 430 is displayed. The third mode screen 430 corresponds to a group image based on a preset criteria. The first screen information 411 is contained in the third mode screen 430, and the display unit 151 displays the first screen information 411 to be distinguished from the remaining images.

According to the present example, it may be possible to receive time information containing screen information in a first state in a different display mode.

The third state may be switched to the second state (or first state) based on the insertion of the crown portion 300.

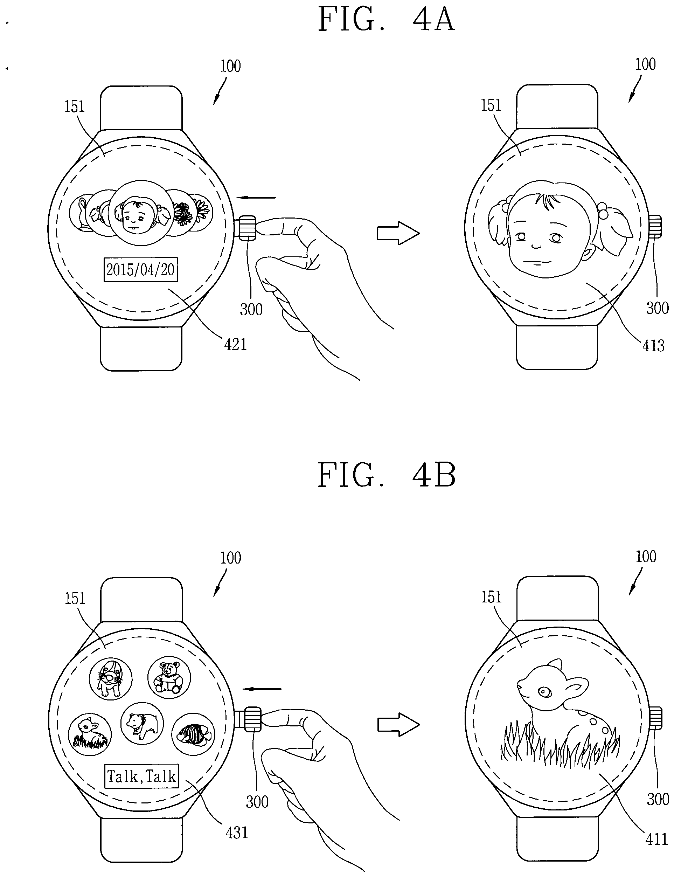

FIGS. 4A and 4B are conceptual views for explaining a control method of switching a display mode according to another example.

Referring to FIG. 4A, the first group image 421 is displayed in the second display mode in a second state in which the crown portion 300 is withdrawn by one step. The first group image 421 is configured with a plurality of images stored on a specific date (04/20/2015), and disposed in a sequential manner. Otherwise, a plurality of images may be displayed with different sizes, and an image disposed at the most center may be displayed in the largest size. When the crown portion 300 is rotated in the second display mode, a location at which the plurality of images are displayed is changed and an image displayed at the center is also changed.

When the crown portion 300 is inserted and switched to a first state, one of the plurality of images is displayed as a whole on the display unit 151. For example, the display unit 151 displays an image displayed at the very center as screen information 413 in the first display mode. Accordingly, a user may select one of a plurality of images contained in one group to display them on the display unit 151.

Referring to FIG. 4B, a third group image 431 in a third state in which the crown portion 300 is withdrawn by two steps is displayed. The third group image 431 may include a plurality of images contained in a group classified based on a specific criteria. The plurality of images may be arranged in substantially the same size. When the crown portion 300 is rotated, the controller 180 may control the display unit 151 to display a group image with another group.

When the crown portion 300 is inserted and switched to a first state, one of a plurality of images contained in the third group image 431 is displayed on the display unit 151 as the first screen information 411. An image selected as the first screen information 411 among the plurality of images may be selected by a specific criteria. For example, the selected image may correspond to an image stored for the first time or the last time.

When the rotation of the crown portion 300 is sensed in a state that the first screen information 411 is displayed, the controller 180 controls the display unit 151 to sequentially display the plurality of images. When all a plurality of images contained in the third group image 431 are displayed, though not shown in detail in the drawing, the display unit 151 may display an image contained in another group or sequentially display images arranged in the time order of being stored regardless of the group.

According to the present example, a user may selectively display one image while receiving screen information in a group state containing a plurality of information.

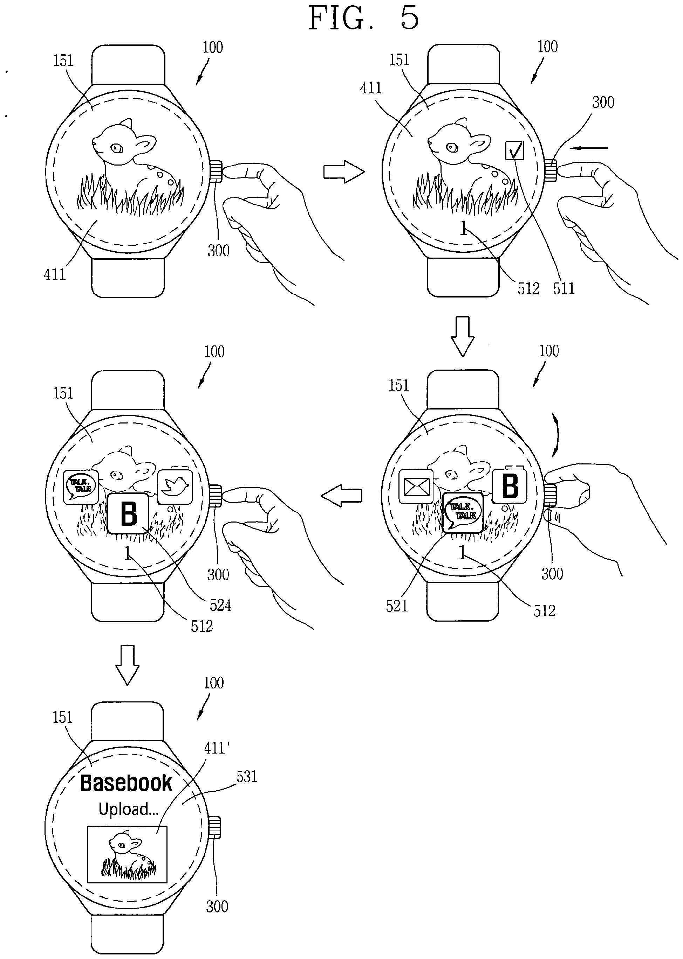

FIG. 5 is a conceptual view for explaining a method of controlling an application with information selected using a crown portion. Referring to FIGS. 2B and 5, the present disclosure may further include a touch sensor (not shown) formed on the first region 310a of the cap portion 310.

When a touch input is applied to the touch sensor in a state that the first screen information 411 in the first state is displayed, the controller 180 selects the first screen information 411. The controller 180 may temporarily store the first screen information 411.

Screen information on the display unit 151 displayed when applying the touch input is selected. When the touch input is applied, the display unit 151 displays a first icon 511 indicating that it is selected and a second icon 512 indicating a number of screen information that has been selected up to the present on the first screen information 411.

When the pressing of the crown portion 300 is sensed based on an external force applied to the crown portion 300 in the first state, the controller 180 displays a third icon 521 indicating executable applications along with the screen information. The third icon 521 is formed with a plurality of icons corresponding to a plurality of applications, and displayed to overlap with the first screen information 411, and also displayed along with at least one of the first and the second icon 511, 512. Referring to FIGS. 2B and 5, a dome switch 361 according to the present embodiment may sense a push operation which is a fourth state in which the crown portion 300 is further deeply inserted in a first state. When the external force is released, the crown portion 300 may be restored to the first state by the elastic portion 331.

The controller 180 may control the display unit 151 to highlight an icon 521 to be selected. Furthermore, the controller 180 may change an icon to be selected by the rotation of the crown portion 300.

The controller 180 executes an application corresponding to an icon to be selected based on a touch input received in a state the icon to be selected is displayed on the display unit 151.

The display unit 151 displays an execution screen 531 of the application along with an image 411' corresponding to the first screen information 411. The image 411' is displayed in a state that the first screen information 411 is modified or the size thereof is changed. The controller 180 may execute a specific function of the application using the first screen information 411. For example, the specific function may correspond to a function of sharing the first screen information 411 with another terminal, uploading it to a specific server, or the like.

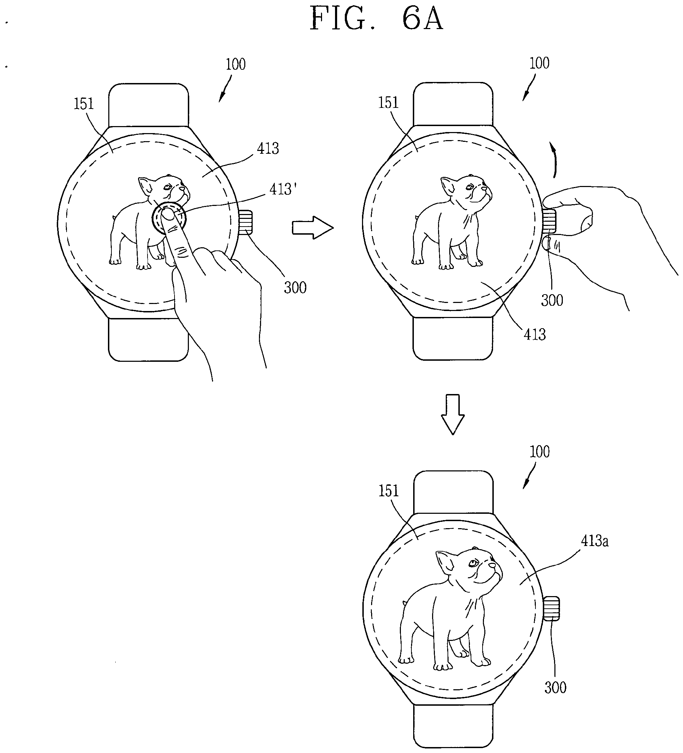

According to the present example, an application may be more conveniently controlled based on control commands differentiated from each other. FIGS. 6A through 6C are conceptual views for explaining a control method distinguished from each other according to the state of a crown portion. Referring to FIGS. 6A through 6C, when the crown portion is rotated in substantially the same range, the controller 180 forms a control command corresponding to a different control range according to the state of the crown portion 300 Hereinafter, a control method of enlarging screen information displayed on the display unit 151 will be described as an example.

The controller 180 executes a zoom-in or zoom-out function of the screen information based on a touch input applied while displaying screen information 413 in the first display mode. The controller 180 may modify the screen information based on a reference region 413' in which a touch input is applied to the screen information.

FIG. 6A is a conceptual view for explaining a control method according to the rotation of the crown portion in a first state. When the rotation of the crown portion 300 is sensed subsequent to applying a touch to the reference region 413', the controller 180 controls the display unit 151 to enlarge the screen information 413. When the crown portion 300 is rotated in a first direction, the screen information 413 is enlarged to display a first enlarged image 413a. Furthermore, when the crown portion 300 is rotated in a second direction opposite to the first direction, the screen information 413 may be reduced.

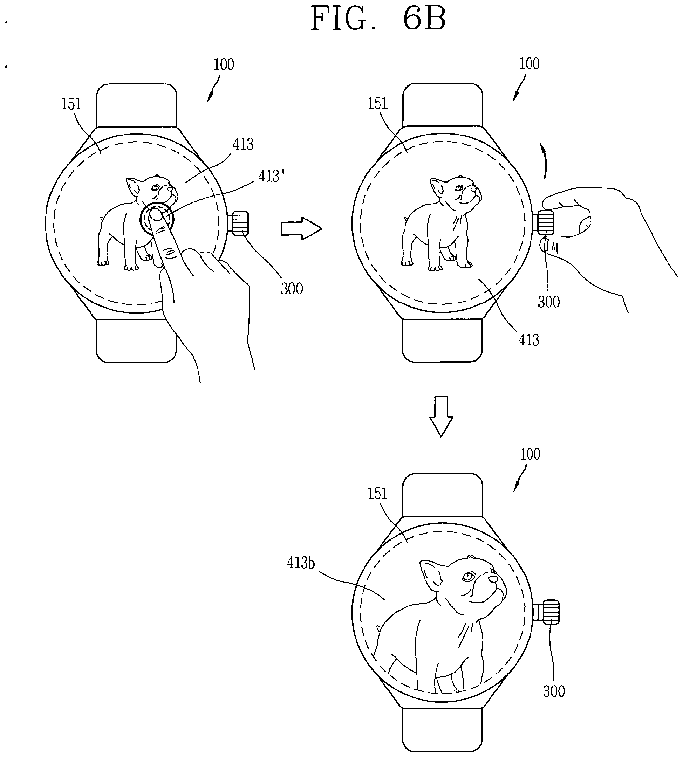

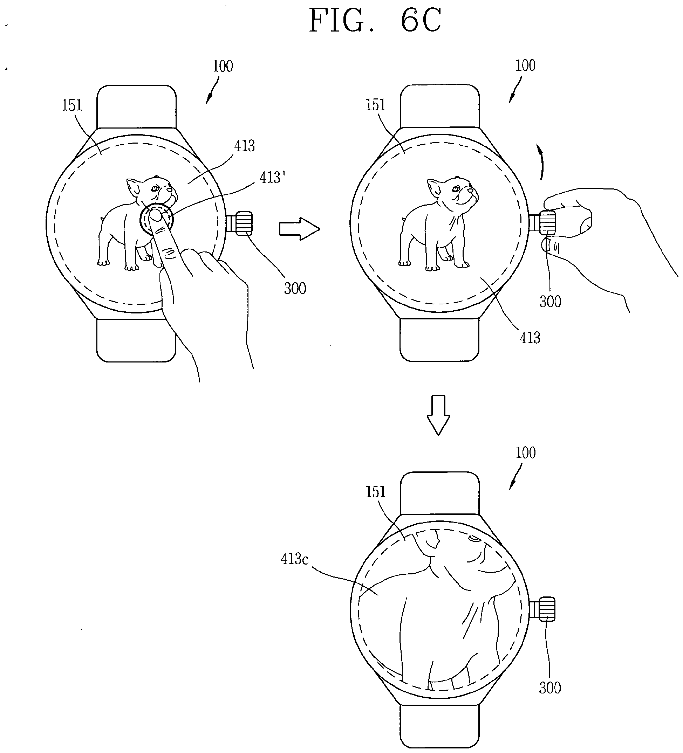

FIG. 6B is a conceptual view for explaining a control method according to the rotation of the crown portion in a second state, and FIG. 6C is a conceptual view for explaining a control method according to the rotation of the crown portion in a third state. FIGS. 6A through 6C illustrate a case where the crown portion is rotated by substantially the same range.

Referring to FIGS. 6B and 6C, when the crown portion 300 is rotated in substantially the same range, the extent of enlarging the screen information 413 in the third state is greater than that of enlarging the screen information 413 in the second state. A second enlarged image 412b in the second state displays a large portion of the screen information 413 in a smaller size than a third enlarged image 412c in the third state.

A function of reducing screen information may also correspond to the enlargement function. In other words, a reduction range based on the same rotation range in the third state is controlled to the maximum extent.

The enlargement and reduction function of a screen has been described as an example, but the present disclosure may not be necessarily limited to this. For example, the present disclosure may be applicable to a function set to various control ranges, and for example, a control of volume, a change of page, a change of date/time, a depth control of 3D image or the like may be applicable thereto.

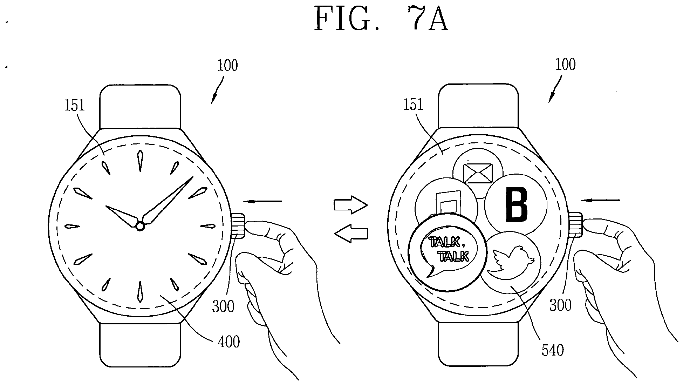

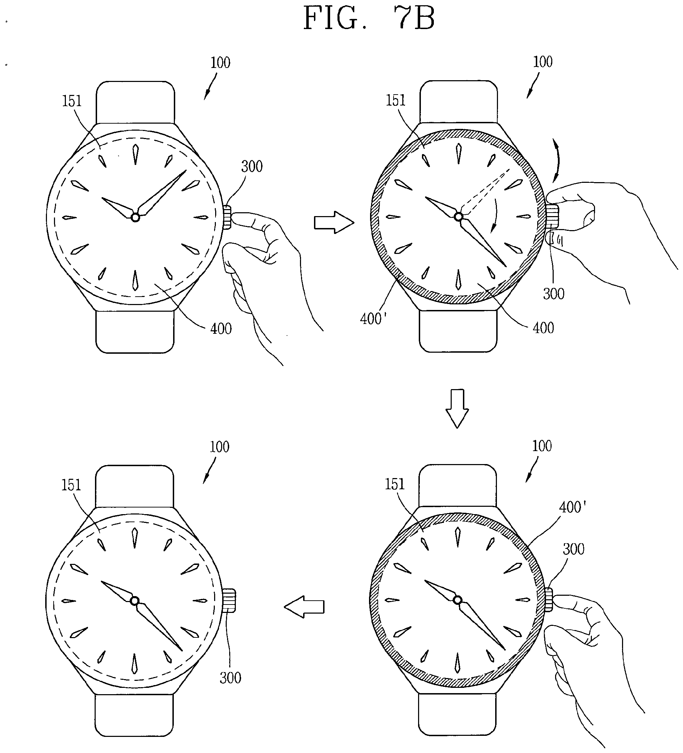

According to the present example, it may be possible to control the same function with a different range based on the withdrawal level of the crown portion. FIGS. 7A and 7B are conceptual views for explaining a control method of a watch type terminal according to the push operation of a crown portion. The crown portion 300 of a watch type terminal according to the present embodiments is further inserted in an inward direction of the body 101 by an external force (push operation) in the first state, and restored again to a first state by the elastic portion 331 when the external force is released. Hereinafter, a function according to the push operation will be described.

Referring to FIG. 7A, the display unit 151 displays the time screen 400 indicating a current time in the first state. The time screen 400 may include a graphic image indicating a time and a graphic image indicating hour and minute hands. The controller 180 controls the display unit 151 to display the time screen 400 in a default state in which a specific control command is not applied in a state that the display unit 151 is activated.

When the push operation is sensed in a state that the time screen 400 is displayed, the controller 180 controls the display unit 151 to display a menu screen 540 containing an icon corresponding to an application. When the push operation is released to restore the crown portion 300, the controller 180 controls the display unit 151 to display the menu screen 540. Icons contained in the menu screen 540 may correspond to applications installed in the watch type terminal 100 or correspond to applications currently being executed.

The icons may be displayed in different types and sizes, and arranged to overlap with each other. Furthermore, when the rotation of the crown portion 300 is sensed, the controller 180 may control the display unit 151 to change the arrangement of the icons.

Furthermore, when the push operation is sensed again in a state that the menu screen 540 is displayed, the controller 180 may control the display unit 151 to switch the menu screen 540 to the time screen 400 again. In other words, the crown portion 300 performs a toggle function in a state that the time screen 400 is displayed.

Though not shown in detail in the drawing, the crown portion 300 may maintain a state of being inserted by the push operation, and have a structure of being restored when a push input is applied again.

A control method for changing a displayed time will be described with reference to FIG. 7B. When the push operation is sensed in a state that the time screen 400 is displayed, the controller 180 executes a time edit function.

When the crown portion 300 is restored to activate a time edit mode, the display unit 151 displays a graphic object 400' indicating this along with the time screen 400. For example, the graphic image 400' may be displayed along an edge of the display unit 151 or implemented by a change of the brightness or color of the time screen 400. When the time edit mode is activated, the controller 180 may sense the rotation of the crown portion 300 to control one of the hour and minute hands.

Though not shown in detail in the drawing, the controller 180 may control the hour hand to be changed by the rotation of the crown portion 300 when the crown portion 300 maintains a push state (fourth state) for a preset period of time (several seconds), and the minute hand to be changed by the rotation when restored from the push state for a short period of time.

When a push operation is applied again to the crown portion 300, the controller 180 switches the time edit mode to an inactive state, and displays the time screen 400 on the display unit 151.

According to the present example, a specific mode may be activated using a push operation.

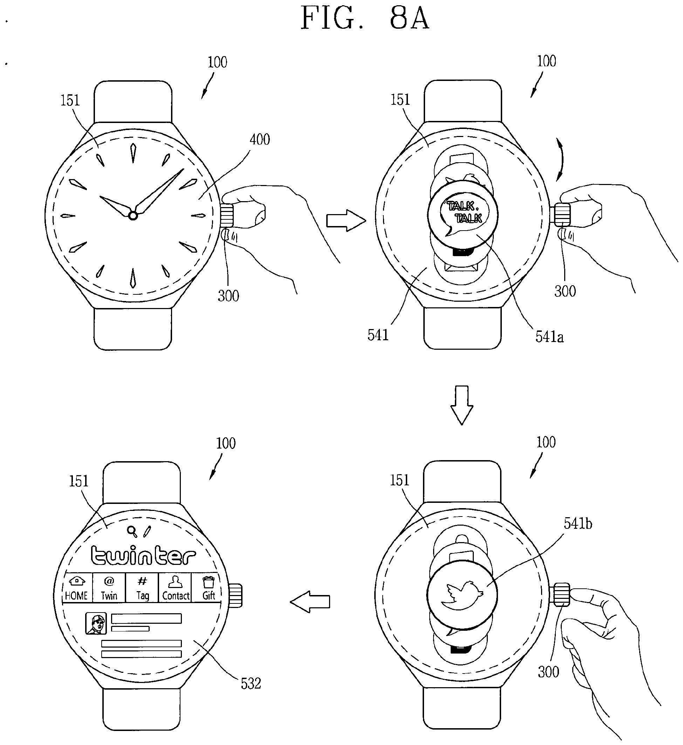

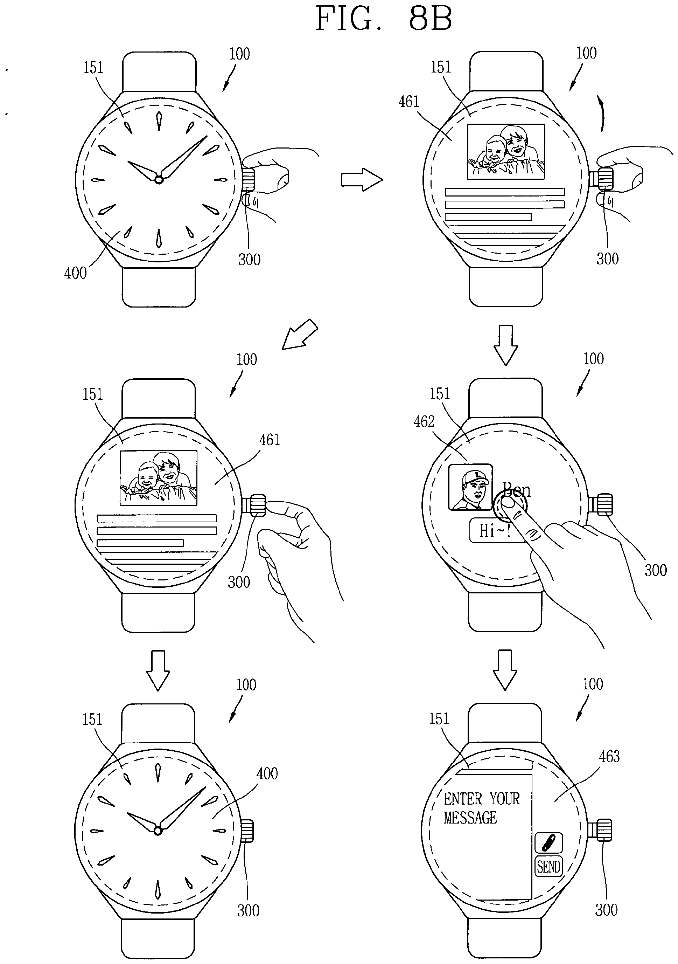

FIGS. 8A and 8B are conceptual views for explaining a control method of a watch type terminal based on a change of the state of a crown portion.

A control method of executing an application based on the withdrawal and insertion of a crown portion will be described with reference to FIG. 8A. The time screen 400 is displayed on the display unit 151 in the first state. When the crown portion 300 is withdrawn by one step based on an external force applied to the crown portion 300, the first state is switched to the second state.

When switched to the second state, the controller 180 controls the display unit 151 to switch the time screen 400 to the menu screen 541. The menu screen 541 may include a plurality of icons corresponding to a plurality of applications. The plurality of icons are arranged by a specific layout. For example, the plurality of icons are overlapped with each other on one region and arranged along one direction, and displayed in different sizes.

The controller 180 may change the arrangement of the plurality of icons based on the rotation of the crown portion 300 in the second state. An icon located at the very center may be changed based on the rotation of the crown portion 300. The icon located at the very center may be displayed in the largest size.

As illustrated in FIG. 8A, in a state that a first icon 541a is displayed at the very center among the plurality of icons, a second icon 541b different from the first icon 541a may be changed to be located at the very center based on the rotation of the crown portion 300.

However, the arrangement of the plurality of icons may not be necessarily limited to the illustration of the drawing, and the display unit 151 may display a specific visual effect on an icon to be selected by the rotation of the crown portion 300.

When the crown portion 300 is inserted and switched from the second state to the first state, the controller 180 executes an application. The executed application may correspond to an application corresponding to an icon displayed at the very center of the display unit 151 in the second state.

When a second state in which the second icon 541b is displayed in a central region of the display unit 151 is changed to the first state, the display unit 151 displays an execution screen 532 of an application corresponding to the second icon 541b. Accordingly, a user may execute an application using a status change according to the withdrawal and insertion of a crown portion. Furthermore, the user may select his or her desired application through the rotation of the crown portion 300.

As a result, a control command for displaying and touching icons displayed on the display unit 151 is not required.

A control method of displaying an execution screen of an application according to an event received will be described with reference to FIG. 8B. The controller 180 displays the time screen 400 on the display unit 151 when the crown portion is in a first state.

When the crown portion 300 is switched from the first state to the third state, the controller 180 controls the display unit 151 to display a first notification screen 461 associated with one event of at least one of events that have been issued. The event may be limited to an event that has not been checked by a user. Here, the first notification screen 461 may correspond to an execution screen of an application containing the event information.

When the crown portion 300 is inserted again in the third state and switched to the first state, the controller 180 controls the display unit 151 to switch the first notification screen 461 to the time screen 400 again.

On the other hand, when the rotation of the crown portion is sensed in the third state, the controller 180 controls the display unit 151 to display a second notification screen 462 for another event.

The display unit 151 displays one execution screen 463 of application corresponding to the second notification screen 462 when a user's touch input is received while displaying the second notification screen 462. Here, there is no limit in a touch input mode. For example, when the touch input corresponds to a long touch input, additional information associated with the event may be displayed when a touch input in a dragging mode is applied.

The execution screen 463 is associated with an event of the second notification screen 462. For example, when the second notification screen 462 includes received message information, the execution screen 463 may correspond to a reply screen for the message.

According to the present embodiment, since events received in a third state can be checked, it is not required that notification images for the received event are displayed on the display unit 151, thereby effectively using a relatively small-sized display unit 151.

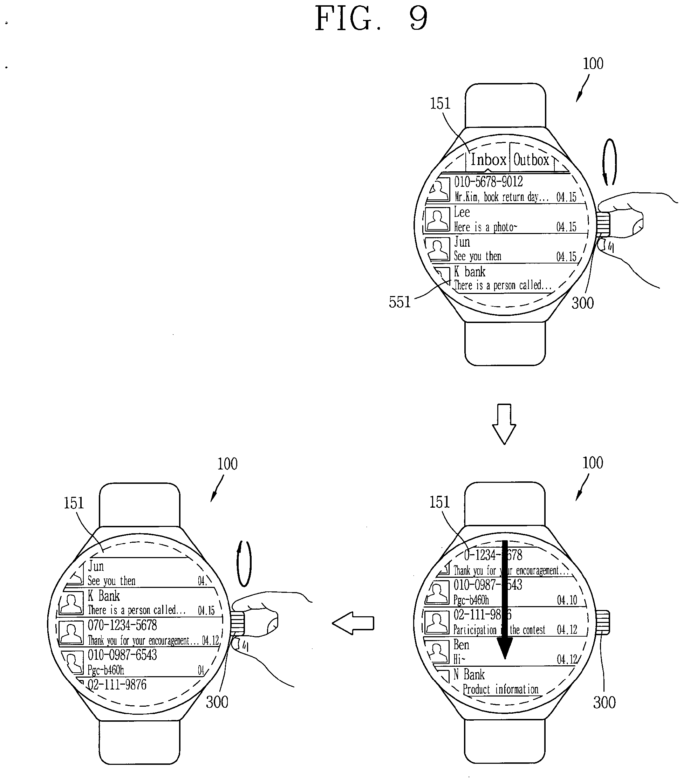

FIG. 9 is a conceptual view for explaining a control method of a watch type terminal according to the rotation speed of a crown portion. Referring to FIGS. 2C and 9, the first sensing unit 363 senses a rotation speed as well as a rotation range of the crown portion 300. In other words, the controller 180 may sense a rotation speed of the crown portion 300 using a period of the movement of the rotation pin 363a, and form a different control command based on this. The rotation speed may be sensed when the crown portion 300 is in all the first through the third state.

A case where screen information 551 containing a list sequentially arranged is displayed on the display unit 151 in the first state will be described. The display unit 151 changes the screen information 551 to correspond to the extent of rotation of the crown portion 300. Here, a change of screen information denotes sequentially displaying an arranged list, and sequentially disappearing the displayed list.

When a speed of rotating the crown portion 300 is greater than a preset reference speed, the controller 180 changes the screen information 551 at a fast speed regardless of the extent of rotation. In other words, the sequentially arranged list may be changed at a fast speed. The fast speed denotes a speed faster than a speed at which screen information is changed when the crown portion 300 is rotated at a speed lower than a reference speed.

When the rotation of the crown portion 300 in an opposite direction is sensed, the controller 180 controls the display unit 151 to reduce a change speed of the screen information. Subsequent to sensing the rotation in the opposite direction, the display unit 151 may change the screen information at a preset reference speed.

According to the present embodiment, it may be possible to receive a lot of screen information displayed on the display unit 151 at a fast speed through the rotation speed of the crown portion 300.

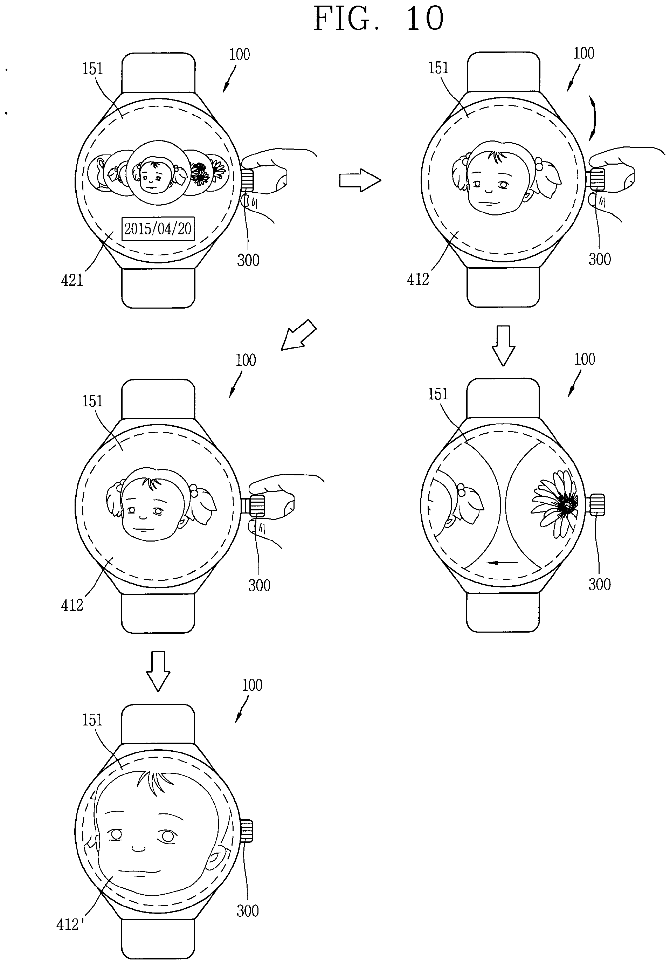

FIG. 10 is a conceptual view for explaining a control method of changing a display mode arbitrary page a change of the state of a crown portion according to another example. Referring to FIG. 10, the display unit 151 displays a first group image 421 in the first mode. For example, the first group image 421 may include a plurality of images classified into a specific group, and correspond to images stored on a specific date. The controller 180 may change an image located at the very center and change the arrangement of images based on the rotation of the crown portion 300 in the first state.

When the crown portion 300 is withdrawn and changed from the first state to the second state, the controller 180 may display one of the plurality of images as a whole on the display unit 151. For example, an image 412 displayed at the center of the plurality of images may be selected. In other words, the display unit 151 displays a clean view of one image.

When the rotation of the crown portion 300 is sensed in the second state, the display unit 151 may sequentially display different images on the display unit 151.

On the other hand, when the crown portion 300 is withdrawn and changed from the second state to a third state, the controller 180 controls the display unit 151 to display an enlarged image 412' of the selected image 412. The controller 180 may form the enlarged image 412' based on a preset enlargement range, and the image 412 may be enlarged around a central region of the image.

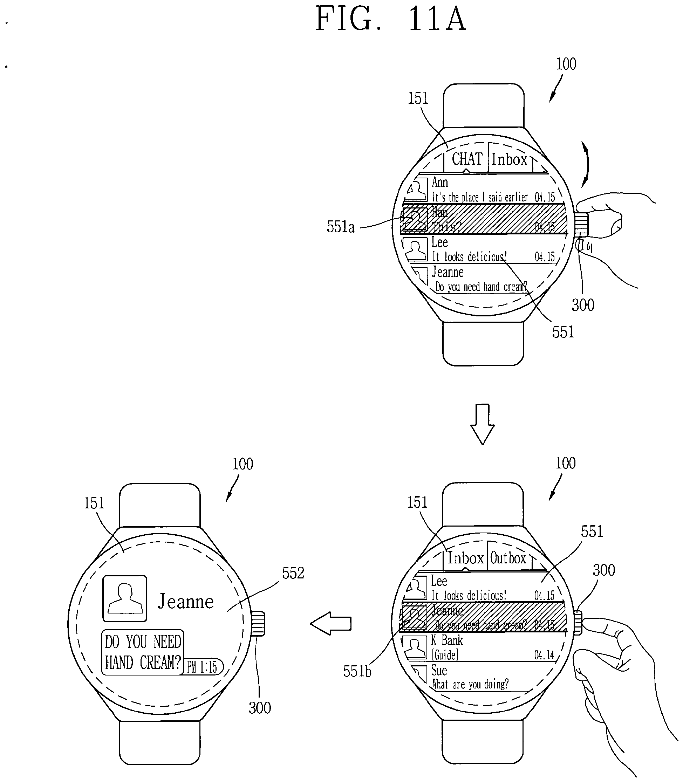

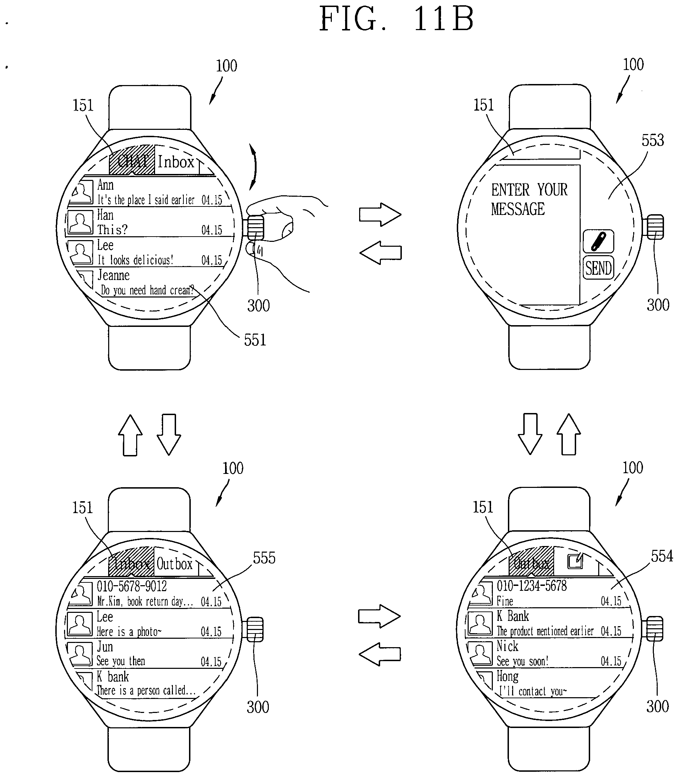

FIGS. 11A and 11B are conceptual views for explaining a control method of an application using a crown portion.

Referring to FIG. 11A, the display unit 151 displays screen information 551 containing a sequentially arranged list in the first state. The screen information 551 may correspond to an execution screen of a specific application (for example, a message application.)

When a change of the crown portion 300 from the first state to a fourth state (i.e., push operation) is sensed, the controller 180 selects one of the plurality of lists. For example, the display unit 151 highlights one of a plurality of lists, and forms a control command for changing a list selected based on the rotation of the crown portion 300. Furthermore, the controller 180 may select a list highlighted when the crown portion 300 is pushed.

The display unit 151 display detailed information 552 corresponding to the selected list. For example, the detailed information 552 may include content of a message received, a time received, sender information, and the like. Furthermore, when a push operation of the crown portion 300 is additionally sensed, the controller 180 may control the display unit 151 to display the screen information 551 again.

A control method of changing a display mode based on the state of the crown portion when an application is being carried out will be described with reference to FIG. 11B. Referring to FIG. 11A again, the controller 180 controls the display unit 151 to sequentially display a plurality of lists based on the rotation of the crown portion 300 in a first display mode in the first state.

On the other hand, the second display mode is activated in the second state, and the display unit 151 forms a control command for changing a folder displayed based on the rotation of the crown portion 300 among folders into which list information contained in the application is divided, thereby sequentially displaying list information corresponding to the folder.

When the crown portion 300 is rotated in the second state, the controller 180 controls the display unit 151 to sequentially display second through fourth screen information 553, 554, 555 corresponding to the plurality of folders. For example, the second screen information 553 includes a screen for entering and sending a message, and the third screen information 554 includes a sent messages list, and the fourth screen information 555 includes a received messages list.

Accordingly, a user may sequentially receive all lists in a first state, and receive lists classified based on a specific criteria in a second state according to the execution of a specific application.

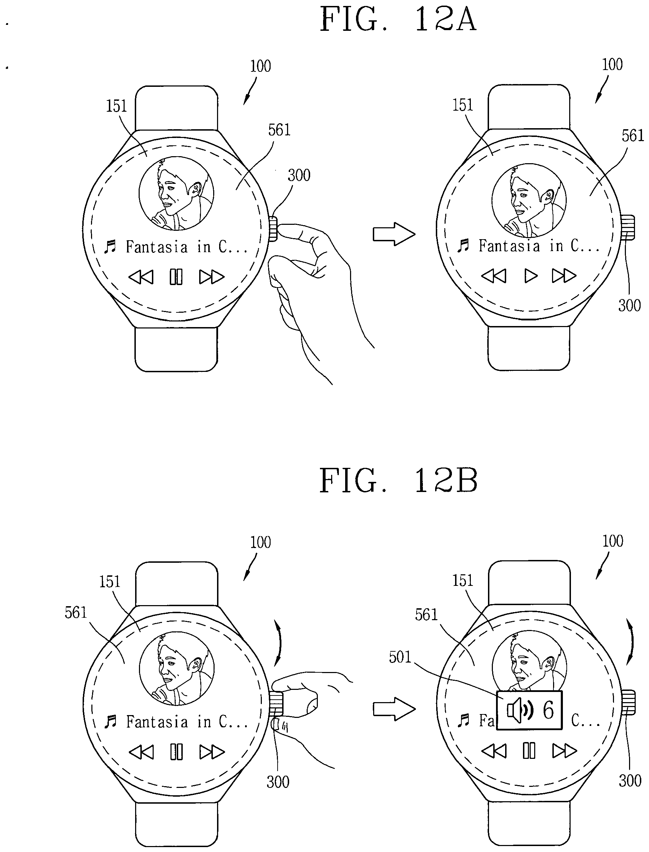

FIGS. 12A through 12D are conceptual views for explaining a control method of an application using a crown portion according to another example. A control method of a play application for playing a media file will be described as an example. The crown portion 300 of a watch type terminal according to the present embodiment is further inserted in an inward direction of the body 101 by an external force (push operation) in the first state, and restored again to a first state by the elastic portion 331 when the external force is released. Referring to FIG. 12A, a first display mode of the display unit 151 is activated according to the first state of the crown portion 300. When a specific media file is played back in the first display mode, the display unit 151 displays a playback screen 561. The playback screen 561 may include information of a media file being played back, playback information and control icons. The controller 180 according to the present example executes a specific function of an application being executed based on a push operation of the crown portion 300.

For example, when a fourth state based on a push operation of the crown portion 300 is sensed, a function of pausing the playback of the media file may be carried out. Furthermore, the display unit 151 may change an image of the corresponding control icon.

Referring to FIG. 12B, the controller 180 forms a cc forms a cc for changing a volume according to the rotation of the crown portion 300 in the first state while the media file is played back.

Furthermore, the display unit 151 displays an image 501 indicating a controlled volume.

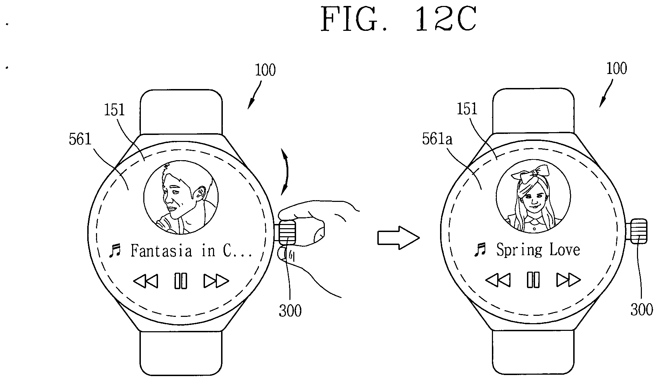

Referring to FIG. 12C, when the first state is changed to a second state, the display unit 151 is activated in the second display mode to execute a different function by the crown portion 300. For example, a control command for changing a media file being played back by the rotation of the crown portion 300 is formed in the second state. Though not shown in the drawing, when the crown portion is rotated in the third state, another function may be carried out.

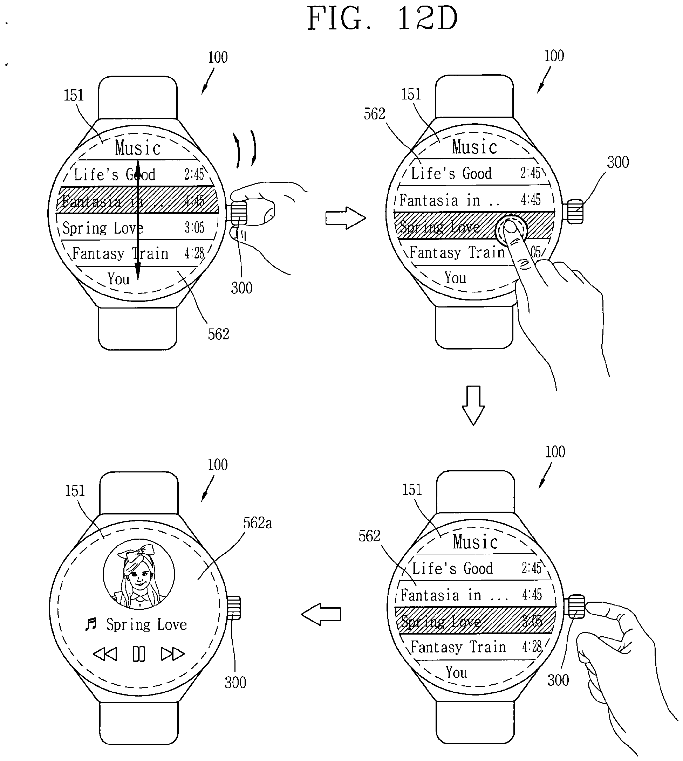

Referring to FIG. 12D, when the crown portion is in a second state, the display unit 151 displays a playback list screen 562 of media files. The playback list screen 562 may include a sequential list of a file currently being played back and a file to be played back next time.

When the crown portion 300 being rotated in opposite directions to each other at each time, respectively, is sensed, the controller 180 selects one of the displayed lists. For example, a list displayed at the very center of the display unit 151 may be selected. The display unit 151 highlights the selected list. In this case, the audio output unit 152 may be playing back another media file.

The controller 180 plays back a media file in the selected list based on a touch input applied to the selected list on the display unit 151. When the crown portion 300 maintains a second state while the selected media file is played back, the display unit 151 continuously displays the playback list screen 562.

When the crown portion 300 is switched to a first state, the controller 180 controls the display unit 151 to display a playback screen 562a of the media file being played back.

In other words, the display unit 151 displays a playback list screen contained in an application in the second state to allow the user to control media files to be played back, and a playback screen of a media file being played back in a first state is displayed to allow the user to control a media file currently being played back.

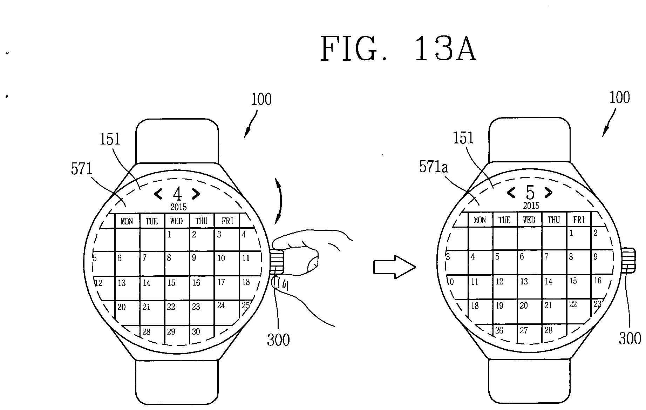

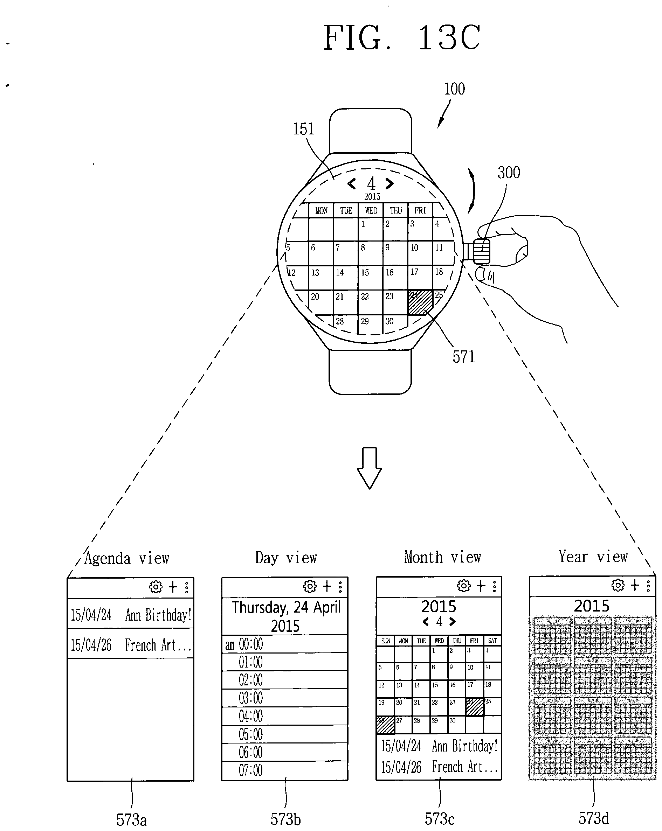

FIGS. 13A through 13C are conceptual view for explaining a control method of an application according to still another example. A control method of a calendar application containing date information and event information will be described as an example.

FIG. 13A illustrates a control method of an application in a first display mode when the crown portion is in a first state. The display unit 151 displays first screen information 571 containing date information according to a preset criteria in the first display mode. For example, the criteria corresponds to a month, and the first screen information 571 may correspond to a calendar contained in one month.

The controller 180 forms a control command for changing the criteria (month) based on the rotation of the crown portion 300. A calendar with the next (or previous) month will be described based on the rotation of the crown portion 300.

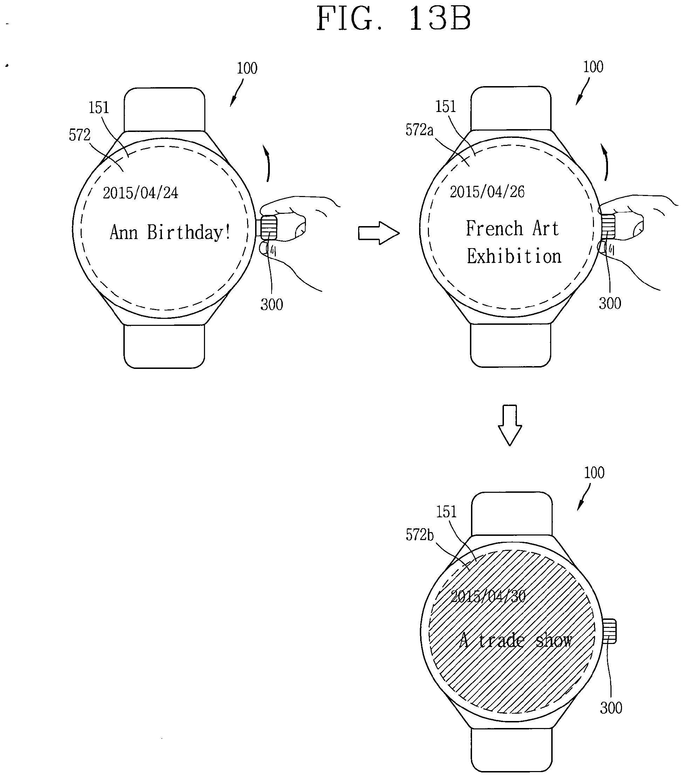

FIG. 13B illustrates a control method of the application in the second display mode when the crown portion is in a second state. When the first state is changed to the second state, the display unit 151 sequentially displays received event information 572 in the second display mode. When the second display mode is activated, the controller 180 displays event information containing date information which is the nearest from a current time point on the display unit 151.

When the crown portion 300 is rotated in the second state, a control command for changing a date contained in the displayed event information is formed. In other words, the display unit 151 may display next event information 572a. Otherwise, the controller 180 may control the display unit 151 to display event information sequentially entered to each other based on the rotation of the crown portion 300. The display unit 151 provides a visual effect when it is an event 572b unread by a user. For example, the display unit 151 may additionally display a specific image or increase the brightness of the screen or include a background image with a specific color.

FIG. 13D illustrates a control method of the display unit 151 according to the third display mode in a third state. The display unit 151 may display screen information in a previous display mode in the third display mode. For example, when the first state is changed to the second state, the display unit 151 may display the first screen information 571.

The controller 180 may sequentially display a calendar screen according to a different display mode based on the rotation of the crown portion 300 in the third display mode. for example, the display mode may include a first calendar screen 573a (Agenda view) containing an event list according to a date, a second calendar screen 573b (Day view) in which a day is partitioned into hours, a third calendar screen 573c (Month view) in which a month is partitioned into days, and a fourth calendar screen 573d in which a year is partitioned into months.

The display unit 151 may sequentially display the screen information 571 and the first through the fourth calendar screen 573a, 573b, 573c, 573d based on the rotation of the crown portion 300.

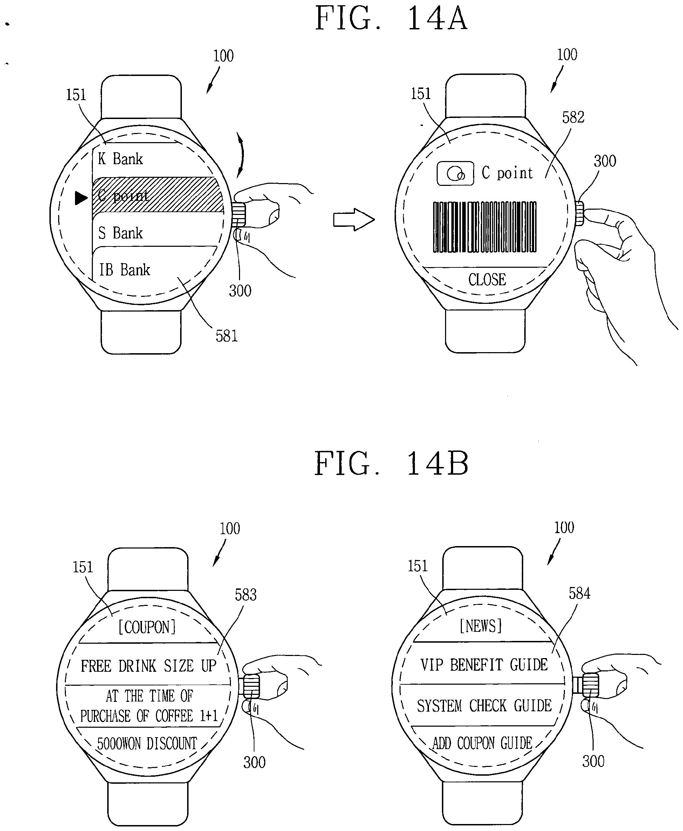

FIGS. 14A and 14B are conceptual views for explaining a control method of an application using a crown portion according to still another example. An application for using information of a plurality of cards to replace the use of a card will be described as an example.

Referring to FIG. 14A, when the application is carried out, the display unit 151 displays a plurality of cards list screen 581 corresponding to a plurality of card information stored in a first state. When the rotation of the crown portion 300 is sensed in the first state, the plurality of cards list screen 581 is changed to include another card list.

The controller 180 may select any one of the plurality of card lists based on a push operation of the crown portion 300. The display unit 151 displays detailed information 582 for the selected card.

Referring to FIG. 14B, when the first state is switched to the second state due to the withdrawal of the crown portion 300, the controller 180 switches the display unit 151 to a second display mode.

The display unit 151 displays first screen information 583 contained in a specific category on the execution screen of the application in the second display mode. For example, the first screen information 583 may include paid coupon information.

On the other hand, when switched to the third state due to the withdrawal of the crown portion by two steps, the display unit 151 displays second screen information 584 different from the first screen information 583 in the third display mode. The second screen information 584 may include information associated with an event received at the application.

In other words, the controller 180 provides different information of an application according to the state of the crown portion.

The foregoing present disclosure may be implemented as codes readable by a computer on a medium written by the program. The computer-readable media includes all types of recording devices in which data readable by a computer system can be stored. Examples of the computer-readable media may include HDD (Hard Disk Drive), SSD (Solid State Disk), SDD (Silicon Disk Drive), ROM, RAM, CD-ROM, a magnetic tape, a floppy disk, an optical data storage device, and the like, and also include a device implemented via a carrier wave (for example, transmission via the Internet). Furthermore, the computer may include the controller 180 of the HMD. The detailed description is, therefore, not to be construed as restrictive in all respects but considered as illustrative.

## Claims

1. A watch type terminal, comprising:
a body (101) having a band (102) formed to be wearable on a user's wrist;
a display (151) coupled to the body;
a crown portion (300) extending from the body (101) and being configured to be rotated about an axis in response to a first applied force and being further configured to linearly extend from the body in response to a second applied force;
**characterized in that** the watch type terminal further comprises:
a sensing unit including a dome switch, configured to sense the rotation and the extension of a crown element, wherein the dome switch is formed to sense a first state of the crown portion (300) in which the crown portion (300) is completely inserted, a second state when the crown portion (300) is extended by a first distance, and a third state when the crown portion (300) is extended by a second distance that is greater than the first distance; and
a controller configured to:
cause changing of a display mode of the display based on extension of the crown portion (300) from the body;
cause changing of information displayed on the display based on rotation about the axis of the crown portion (300);
cause the display to switch from a time screen indicating a current time in the first state to a first notification screen associated with one event of at least one of events that have been issued, when the crown portion (300) is switched from the first state to the third state;
cause the display to switch from the first notification screen to a second notification screen associated with another event of at least one of events that have been issued, when the crown portion (300) is rotated at the third state; and
cause the display to switch from the second notification screen to the time screen when the third state is changed to the first state.

2. The watch type terminal of claim 1, wherein the crown portion (300) comprises:
a cap portion (310) comprising a first region exposed outside of the body to permit receiving of the first applied force and a second region being received within the body;
a body portion connected to the first region and configured to surround the second region;
a tooth portion (350) connected to an end portion of the second region to interlock during the rotation of the cap portion (310) of the crown element; and
an elastic portion (331) configured to elastically support the first region and the body portion.

3. The watch type terminal of claim 2, wherein the sensing unit further comprises:
a first sensing unit comprising a rotation pin moving to engage with the tooth portion (350) to sense the rotation; and
a second sensing unit having a pressing portion formed on one region of the tooth portion (350) to sense the extension and the dome switch (361) configured to be pressed by the pressing portion.

4. The watch type terminal of claim 1, wherein the display further comprises a touch sensor configured to receive a touch input, and wherein the controller is further configured to:
cause the display to display an execution screen of an application associated with the event based on the touch input.

## Patentansprüche

1. Uhrenartiges Endgerät, mit:
einem Körper (101), der ein Band (102) aufweist, das dazu geformt ist, auf einem Handgelenk eines Benutzers getragen zu werden,
einem mit dem Körper gekoppelten Display (151),
einem Kronenbereich (300), der sich von dem Körper (101) erstreckt und dazu eingerichtet ist, in Reaktion auf eine erste aufgebrachte Kraft um eine Achse gedreht zu werden, und ferner dazu eingerichtet ist, in Reaktion auf eine zweite aufgebrachte Kraft linear aus dem Körper auszufahren,
**dadurch gekennzeichnet, dass** das uhrenartige Endgerät ferner aufweist:
eine Erfassungseinheit mit einem kuppelförmigen Schalter, die dazu eingerichtet ist, die Drehung und das Ausfahren eines Kronenbauteils zu erfassen, wobei der kuppelförmige Schalter dazu ausgebildet ist, einen ersten Zustand des Kronenbereichs (300), in dem der Kronenbereich (300) vollständig eingefahren ist, einen zweiten Zustand, wo der Kronenbereich (300) eine erste Distanz ausgefahren ist, und einen dritten Zustand zu erfassen, wo der Kronenbereich (300) eine zweite Distanz ausgefahren ist, die größer ist als die erste Distanz, und
eine Steuereinheit, die dazu eingerichtet ist:
einen Wechsel eines Displaymodus des Displays zu veranlassen basierend auf einem Ausfahren des Kronenbereichs (300) aus dem Körper,
einen Wechsel von auf dem Display angezeigter Information zu veranlassen basierend auf einer Drehung um die Achse des Kronenbereichs (300),
das Display zu veranlassen, von einem Zeitbildschirm, der in dem ersten Zustand eine aktuelle Zeit angibt, auf einen ersten Benachrichtigungsbildschirm umzuschalten, der einem Ereignis von zumindest einem von Ereignissen zugehörig ist, die ausgegeben worden sind, wenn der Kronenbereich (300) von dem ersten Zustand in den dritten Zustand geschaltet wird,
das Display zu veranlassen, von dem ersten Benachrichtigungsbildschirm auf einen zweiten Benachrichtigungsbildschirm umzuschalten, der einem anderen von zumindest einem von Ereignissen zugehörig ist, die ausgegeben worden sind, wenn der Kronenbereich (300) in dem dritten Zustand gedreht wird, und
das Display zu veranlassen, von dem zweiten Benachrichtigungsbildschirm auf den Zeitbildschirm umzuschalten, wenn der dritte Zustand in dem ersten Zustand geändert wird.

2. Uhrenartiges Endgerät nach Anspruch 1, bei dem der Kronenbereich (300) aufweist:
einen Kappenabschnitt (310) mit einem ersten Bereich, der außerhalb des Körpers freiliegend ist, um ein Aufnehmen der ersten aufgebrachten Kraft zu gestatten, und einen zweiten Bereich, der innerhalb des Körpers aufgenommen ist,
einen Körperabschnitt, der mit dem ersten Bereich verbunden und dazu eingerichtet ist, den zweiten Bereich zu umgeben,
einen Zahnabschnitt (350), der mit einem Endbereich des zweiten Bereichs verbunden ist, um sich während der Drehung des Kappenabschnitts (310) des Kronenbauteils zu verblocken, und
einen elastischen Abschnitt (331), der dazu eingerichtet ist, den ersten Bereich und den Körperabschnitt elastisch zu lagern.

3. Uhrenartiges Endgerät nach Anspruch 2, bei dem die Erfassungseinheit ferner aufweist:
eine erste Erfassungseinheit mit einem Drehstift, der sich bewegt, um mit dem Zahnbereich (350) zum Erfassen der Drehung in Eingriff zu treten, und
eine zweite Erfassungseinheit mit einem Drückbereich, der auf einem Bereich des Zahnbereichs (350) zum Erfassen des Ausfahrens ausgebildet ist, und dem kuppelförmigen Schalter (361), der dazu eingerichtet ist, von dem Drückbereich gedrückt zu werden.

4. Uhrenartiges Endgerät nach Anspruch 1, bei dem das Display ferner einen zum Empfangen einer Berührungseingabe eingerichteten Berührungssensor aufweist und bei dem die Steuereinheit ferner dazu eingerichtet ist:
das Display zu veranlassen, basierend auf der Berührungseingabe einen Ausführungsbildschirm einer Anwendung anzuzeigen, die dem Ereignis zugehörig ist.

## Revendications

1. Terminal de type montre, comprenant :
un corps (101) ayant un bracelet (102) formé pour être porté autour d'un poignet d'utilisateur ;
un écran (151) couplé au corps ;
une partie de couronne (300) s'étendant à partir du cops (101) et étant conçue pour tourner autour d'un axe en réponse à une première force appliquée et étant en outre conçue pour s'étendre linéairement à partir du corps en réponse à une seconde force appliquée ;
**caractérisé en ce que** le terminal de type montre comprenant en outre :
une unité de détection comprenant un commutateur en dôme, conçue pour détecter la rotation et l'extension d'un élément de couronne, le commutateur en dôme étant formé pour détecter une premier état de la partie de couronne (300) dans laquelle la partie de couronne (300) étant complètement insérée, un deuxième état lorsque la partie de couronne (300) s'étend sur une première distance, et un troisième état lorsque la partie de couronne (300) s'étend sur une deuxième distance qui est supérieure à la première distance ; et
un organe de commande conçu pour :
amener un changement d'un mode d'affichage de l'écran sur la base de l'extension de la partie de couronne (300) à partir du corps ;
amener l'écran à commuter d'un écran temporel indiquant l'heure actuelle dans le premier état à un premier écran de notification associé à un événement d'au moins un parmi des événements qui ont été produits, lorsque la partie de couronne (300) est commutée du premier état au troisième état ;
amener l'écran à commuter du premier écran de notification à un second écran de notification associé à un autre événement d'au moins un parmi des événements qui ont été produits, lorsque la partie de couronne (300) tourne dans le troisième état ; et
amener l'écran à commuter du second écran de notification à l'écran temporel lorsque le troisième état passe au premier état.

2. Terminal de type montre selon la revendication 1, la partie de couronne (300) comprenant :
une partie de capuchon (310) comprenant une première zone apparente à l'extérieur du corps pour permettre de recevoir la première force appliquée et une seconde zone étant logée à l'intérieur du corps ;
une partie de corps relié à la première zone et conçue pour entourer la seconde zone ;
une partie dentée (350) reliée à une partie marginale de la seconde zone pour se verrouiller pendant la rotation de la partie de capuchon (310) de l'élément de couronne ; et
une partie élastique (331) conçue pour supporter élastiquement la première zone et la partie de corps.

3. Terminal de type montre selon la revendication 2, l'unité de détection comprenant en outre :
une première unité de détection comprenant une tige de rotation se déplaçant pour s'engrener avec la partie dentée (350) pour détecter la rotation ; et
une seconde partie de détection ayant une partie de pression formée sur une zone de la partie dentée (350) pour détecter l'extension et le commutateur en dôme (361) conçu pour être enfoncé par la partie de pression.

4. Terminal de type montre selon la revendication 1, l'écran comprenant en outre un capteur tactile conçu pour recevoir une entrée tactile, et l'organe de commande étant en outre conçu pour :
amener l'écran à afficher un écran d'exécution d'une application associée à l'événement sur la base de l'entrée tactile.
